# EUROPÄISCHE PATENTSCHRIFT

(11) **EP 0 395 724 B1**
(45) Veröffentlichungstag und Bekanntmachung des Hinweises auf die Patenterteilung: **29.12.1993**
(21) Anmeldenummer: 89901540.8
(22) Anmeldetag: 07.01.1989
(51) Int. Cl.: A01G 9/10, C05F 7/00, C05G 3/04

(54) **VERFAHREN ZUM VERWERTEN VON KLÄRSCHLÄMMEN**
PROCESS FOR UTILIZING SEWAGE SLUDGE
PROCEDE D'UTILISATION DE BOUES DE CURAGE

(30) Priorität: 14.01.1988 DE 3800814
(43) Veröffentlichungstag der Anmeldung: 07.11.1990
(73) Patentinhaber: KAHL, Lothar, D-76351 Linkenheim-Hochstetten (DE)
(72) Erfinder: KAHL, Lothar, D-7515 Linkenheim-Ho (DE); KALLISTRATOS, George, GR-11257 Athen (GR); JACOB, Manfred, D-7515 Linkenheim (DE)
(74) Vertreter: Trappenberg, Hans
(86) Internationale Anmeldenummer: EP8900009
(87) Internationale Veröffentlichungsnummer: WO8906486

(56) Entgegenhaltungen:
- EP-A- 0 052 526
- FR-A- 2 286 604
- FR-A- 2 397 342
- Chemical Abstracts, vol. 108, No. 13, March 1988 (Colombus, Ohio, US) see page 527, abstract 111265h

## Beschreibung

Weltweit fallen immer größere Mengen Klärschlamm an. Dieser Klärschlamm enthält unter anderem Stickstoff, Phosphat, Kali und Kalk,also Stoffe, die sich ausgezeichnet als Pflanzennährstoffe und Boden-Verbesserungsmittel verwenden ließen. Tatsächlich wird der Klärschlamm jedoch kaum landwirtschaftlich verwertet, insbesondere da er Schwermetalle enthält. Diese Schwermetalle liegen im Klärschlamm zwar in oxidierter Form vor und sind daher an sich unschädlich. Erst dann, wenn diese Schwermetalloxide in saurem Mileu reduziert werden, somit also die ursprünglichen Schwermetalle wieder in Erscheinung treten, können sie dem Pflanzenwachstum und der Qualität der Ernteprodukte schaden. Dieses saure Mileu ist jedoch in den Industrieländern mehr oder weniger stark durch den "sauren Regen" gegeben. Dieser "saure Regen" ist die Folge von in die Luft gelangtem gasförmigem Schwefeldioxid oder Stickoxiden, die sich bereits während des Transports in der Atmosphäre oder aber nach ihrer Ablagerung an der Erdoberfläche in die starken Mineralsäuren Schwefelsäure oder Salpetersäure umwandeln. Diese starken Säuren sind in stark verdünnten Lösungen - wie dies beispielsweise bei den sauren Niederschlägen der Fall ist - fast vollständig in positiv geladene Wasserstoff-Ionen und in die entsprechenden negativ geladenen Anionen zerfallen, "dissoziiert". Diese Wasserstoff-Ionen reduzieren nunmehr die Schwermetalloxide, womit dann tatsächlich eine Kontaminierung des Bodens und gegebenenfalls auch der darauf wachsenden Pflanzen erfolgen kann. Die Klärschlämme müssen daher auf Deponie gelagert oder verbrannt beziehungsweise pyrolisiert werden.

Der Boden in den Industriegebieten wie auch die landwirtschaftlich genutzten Flächen sind bereits stark schwermetallhaltig. Die weitere Zufuhr von Schwermetallen, beispielsweise durch die Verwendung von Klärschlämmen als Düngemittel, kann daher nicht zugelassen werden. Trotzdem sollte dies das Ziel einer Klärschlammverwertung sein, da sie, wie oben angeführt, all die Pflanzennährstoffe und Bodenverbesserungsmittel enthalten, die ansonsten extra mit hohem Energieaufwand hergestellt werden müssen. Es bleibt daher nur die Möglichkeit, entweder die Schwermetalle aus dem Klärschlamm zu entfernen oder die Klärschlämme so einzusetzen, daß ihr Schwermetallgehalt weder Menschen noch Tieren oder Pflanzen schadet und auch keine Anreicherung im Boden stattfindet.

Der Erfindung liegt die Aufgabe zu Grunde, diese Klärschlämme unter Ausnutzung der in ihnen enthaltenen Pflanzennährstoffe zu verwerten. Erreicht wird dies dadurch, daß der bestimmende Anteil der Bodenmischung Klärschlamm ist, daß der Klärschlamm vor dem Einsacken entwässert wird, daß ihm die wasserspeichernden und wasserabsorbierenden Mittel beigemengt und ihm Mikroorganismen sowie Kleinst- und Kleinlebewesen beigefügt werden und daß sodann der so vorbereitete Sack in eine Pflanzgrube eingegraben wird.

Eine ähnliche Verwertung, unter anderem von Klärschlamm, ist bekanntgeworden durch die DE-OS 33 10 883. In dieser Veröffentlichung wird für einen Pflanzenschmuck an steilen Flächen, Mauern, Gittern, Brüstungen etc. oder als Ergänzung beziehungsweise Ersatz für andere Pflanzenbehälter, also beispielsweise Blumentöpfe oder Blumenkästen, eine aus Kunststoffolie oder beschichtetem Gewebematerial hergestellt Pflanztasche vorgeschlagen, die an diesen Flächen aufgehängt werden kann. Die Füllung der Pflanztaschen soll hierbei in einer zweckentsprechenden Mischung oder in der alleinigen Verwendung von Erde, Torf, Klärschlamm, Kompost, gegebenenfalls zusammen mit leichten Füllstoffen bestehen. Diese Vorveröffentlichung weist damit lediglich darauf hin, daß, wie an sich bekannt, Klärschlamm dem Boden als zweckmäßige Beigabe zugefügt werden kann.

Bei der Klärschlammverwertung nach der Erfindung hingegen wird der vorbereitete Sack nicht isoliert irgendwo aufgehängt, sondern in eine Pflanzgrube eingegraben, also im Boden versenkt. Wie durchgeführte Versuche gezeigt haben, wachsen die in solchen eingegrabenen Säcken befindlichen Pflanzen außerordentlich gut und sogar bedeutend schneller als Pflanzen im umgebenden Erdreich. Dies ist selbstverständlich darauf zurückzuführen, daß die Pflanzen durch den Klärschlamm all die Pflanzennährstoffe erhalten, die sie zum Wachstum benötigen und daß diesem Klärschlamm zudem noch wasserspeichernde und wasserabsorbierende Mittel beigemengt und die sonstigen notwendigen Ingredienzien wie auch die zweckmäßigen Mikroorganismen und Kleinstlebewesen zugefügt sind. Da dem Klärschlamm auch wasserspeichernde und gegebenenfalls wasserabsorbierende Mittel beigefügt sind, bleibt dieser "Boden" auch stets feucht, so daß auch stets das von der Pflanze benötigte Wasser zur Verfügung steht.

Der Einsatz dieses Verfahrens ist besonders interessant in ariden Gebieten, also beispielsweise in Wüsten und Wüstenrandgebieten. Solche Wüstengebiete existieren praktisch in sämtlichen Erdteilen. Tatsächlich haben Versuche, die in Sandwüsten durch-geführt wurden, gezeigt, daß auch dort Pflanzen nicht nur wachsen, sondern auch lange Trockenperioden überstehen. Dies ist darauf zurückzuführen, daß die wasserspeichernden und wasserabsorbierenden Mittel die auch dort vorhandene Luftfeuchtigkeit aufnehmen und somit die Pflanze stets genügend Feuchtigkeit beziehungsweise Wasser zum Gedeihen bekommt.

Die Melioration von ariden Gebieten scheiterte bisher immer daran, daß Anpflanzungen im nackten Sand, beispielsweise unter Verwendung von Dünengewächsen, nicht möglich waren, weil auch diese Dünengewächse eine minimale Feuchtigkeit benötigen. Auch die Versuche, vollwertigen Boden in diese Gebiete zu verbringen und darauf dann Pflanzen zu züchten, schlugen fehl, weil der Boden nach kurzer Zeit ausgetrocknet war und die Pflanzen damit verdorrten. Wird jedoch nach der Erfindung vorgegangen, so bleibt der so hergestellte "Boden", wie die Versuche gezeigt haben, auch in längeren Trockenperioden feucht, so daß die Pflanzen, wenn auch unter erschwerten Bedingungen, wachsen können. Hinzu kommt, daß sich in diesem feuchtgehaltenen "Boden" auch Bakterien, Kleinst- und Kleinlebewesen ansiedeln, die wiederum eine Symbiose mit dem Wurzelwerk der Pflanze eingehen und so wiederum zum Gedeihen der Pflanzen beitragen.

Um zu vermeiden, daß Krankheitskeime mit dem Klärschlamm verschleppt werden, empfiehlt es sich, ihn vor dem Einsacken beziehungsweise vor dem Einpflanzen zu pasteurisieren. Durch das Pasteurisieren werden nicht nur solche Keime abgetötet, sondern auch Würmer und Wurmeier, die möglicherweise der Pflanze schaden könnten. Das Pasteurisieren kann auf äußerst einfache Weise auch so erfolgen, daß die mit Klärschlamm gefüllten Säcke am im allgemeinen sonnenreichen Bestimmungsort zunächst eine bestimmte Zeit der direkten Sonnenbestrahlung ausgesetzt werden. Weiter können die Klärschlämme auch dadurch entseucht werden, daß sie ionisierenden Strahlen ausgesetzt werden. Als Strahler können hierbei die vorhandenen radioaktiven Isotope von Kobalt oder Cäsium (Co-60, Cs-134, Cs-137) dienen.

Als wasserspeichernde beziehungsweise wasserabsorbierende Mittel werden nach der Erfindung Kieselgel, Kieselgur, Tonminerale und Zeolithe sowie auch Polyalkohole (Glykol, Glyzerin, Hexit) wie auch Polyacrylamide vorgeschlagen. Selbstverständlich ist diese Aufzählung unvollständig. Beispielsweise können als wasserspeichernde und wasserabsorbierende Mittel auch Infusorienerde oder Diatomeenerde eingesetzt werden, jedoch auch Kieselschwämme, gemahlenes Vulkangestein und ähnliches. Die Wahl dieser Mittel hängt auch sehr vom Einsatzort des erfindungsgemäßen Verfahrens beziehungsweise dem Fundort dieser wasserabsorbierenden Mittel ab. Sind beispielsweise am Einsatzort Tonmineralien vorhanden, wird man selbstverständlich den Klärschlamm mit Tonmineralien vermengen; findet sich dort Diatomeenerde, kann diese beigemengt werden.

Neben diesen wasserspeichernden und wasserabsorbierenden Mitteln kann der Klärschlamm selbstverständlich auch noch mit dort vorhandener Erde - Sand, Kalksplit etc. - oder auch mit organischen Materialien - Baumrinde, Sägemehl, Laub etc. - vermengt werden.

Der Sack wird zweckmäßigerweise aus einer Kunststofffolie gefertigt; er kann auch aus Papier oder anderen organischen Stoffen, zum Beispiel Jute, hergestellt sein, gegebenenfalls unter Beimengung oder mit Beschichtung aus Kunststoff. Weiter können in das Sackmaterial auch Mittel eingearbeitet sein, die der Desinfektion des Klärschlammes oder auch dem Schutz der Anpflanzung, beispielsweise vor Wurzelfraß durch Klein- und Kleinstlebewesen oder dem Abfressen durch pflanzenfressende Tiere dienen. Zweckmäßigerweise wird der Sack oberhalb des Sackbodens mit Öffnungen versehen, wobei die Öffnungen Schlitze, vorzugsweise in V-Form, sein können. Um ein Herausrieseln des Klärschlammes zu vermeiden, können die V-förmigen Schlitze so ausgeführt werden, daß ein Steg an der Spitze des V-förmigen Einschnittes bestehen bleibt.

An der Öffnung der Säcke kann der dort freiliegende Klärschlamm beziehungsweise "Boden" ebenfalls mit niederen Gräsern, vorzugsweise mit Süßgräsern etc., bepflanzt werden. Empfehlenswert sind hierbei Grasarten, die insbesondere im Schutz von Sträuchern und Büschen, die ja in diesen Säcken wachsen sollen, gedeihen und nicht höher als einige Zentimeter werden. Hierbei kann auch eine Auswahl getroffen werden, die geeignet ist, pflanzenfressende Tiere abzuweisen. Auch wird empfohlen Knöterichgewächse, in denen sich bevorzugt Schwermetalle sammeln, einzusetzen.

Die Klärschlämme weisen im allgemeinen einen Wassergehalt von etwa 95 % auf. Nach der Erfindung sollen die Klärschlämme sowohl zur Verringerung des Transportvolumens wie auch zur einfacheren Handhabung entwässert werden auf eine noch wirtschaftlich vertretbare Feuchte von beispielsweise 60 %. Der so entwässerte Klärschlamm mit einer Trockensubstanz von etwa 40 % ist stichfest und ohne Schwierigkeiten einzusacken. Auch der Transport in Behältern oder auch in großräumigen Schiffsladeräumen bietet in dieser Konsistenz keine Schwierigkeiten.

Insgesamt ergibt sich durch die Anwendung des Verfahrens nach der Erfindung nicht nur eine Möglichkeit, die in den Industriegebieten anfallenden Klärschlämme zu verwerten, sondern auch die Möglichkeit, aride Gebiete zu kultivieren.

## Patentansprüche

1. Verfahren zum Verwerten von Klärschlämmen, bei dem eine Klärschlamm enthaltende Bodenmischung zusammen mit wasserspeichernden und wasserabsorbierenden Mitteln sowie mit zum Wachstum und zum Schutz von Pflanzen notwendigen Ingredienzien in einen Sack verbracht und ein geeigneter Schößling oder Samen eingepflanzt wird,
dadurch gekennzeichnet,
daß der bestimmende Anteil der Bodenmischung Klärschlamm ist, daß der Klärschlamm vor dem Einsacken entwässert wird, daß ihm die wasserspeichernden und wasserabsorbierenden Mittel beigemengt und ihm Mikroorganismen sowie Kleinst- und Kleinlebewesen beigefügt werden und daß sodann der so vorbereitete Sack in eine Pflanzgrube eingegraben wird.

2. Verfahren nach Anspruch 1,
dadurch gekennzeichnet,
daß der Klärschlamm pasteurisiert wird.

3. Verfahren nach Anspruch 1,
dadurch gekennzeichnet,
daß der Klärschlamm durch Bestrahlung mit ionisierenden Strahlen entseucht wird.

4. Verfahren nach Anspruch 1,
dadurch gekennzeichnet,
daß der Klärschlamm vor der Verwertung intensiver Sonnenbestrahlung ausgesetzt wird.

5. Verfahren nach Anspruch 1,
dadurch gekennzeichnet,
daß dem Klärschlamm weitere organische Abfälle wie Hausmüllsubstrat, Brauereiabfälle, Gülle, Mist, kompostierter Klärschlamm, Baumrinde, Sägemehl, Laub etc. beigemengt wird.

6. Verfahren nach Anspruch 1,
dadurch gekennzeichnet,
daß dem Klärschlamm als wasserabsorbierende Mittel Kieselgel und Kieselgur und Tonminerale und Zeolithe und Polyalkohole (Glykol, Glyzerin, Hexit) und Polyacrylamide beigefügt werden.

7. Verfahren nach Anspruch 1,
dadurch gekennzeichnet,
daß der Sack aus Kunststoffolie oder aus mit Kunststoff beschichteten organischen Materialien (Papier, Jute) ist.

## Claims

1. A method of making use of sewage sludges in which a soil mixture containing sewage sludge, together with water-storing and water-absorbing agents and with ingredients necessary for the growth and protection of plants is put into a bag and a suitable shoot or seed is planted therein, characterised in that the determining proportion of the soil mixture is sewage sludge, that the sewage sludge is dewatered before being put into the bag, that the water-storing and water-absorbing agents are added thereto and micro-organisms and small and very small organisms are added and that then the bag prepared in that way is buried in a plant hole.

2. A method according to claim 1 characterised in that the sewage sludge is pasteurised.

3. A method according to claim 1 characterised in that the sewage sludge is sterilised by irradiation with ionising rays.

4. A method according to claim 1 characterised in that the sewage sludge is exposed to intensive solar radiation before being put to use.

5. A method according to claim 1 characterised in that further organic wastes are added to the sewage sludge such as domestic refuse substrate, brewery waste, liquid manure, dung, composted sewage sludge, tree bark, sawdust, leaves etc.

6. A method according to claim 1 characterised in that added to the sewage sludge as water-absorbing agents are silica gel and kieselguhr and clay minerals and zeolites and polyalcohols (glycol, glycerine, hexite) and polyacrylamides.

7. A method according to claim 1 characterised in that the bag is of plastics foil or of organic materials (paper, jute) coated with plastics material.

## Revendications

1. Procédé d'utilisation de boues de curage, dans lequel un mélange de sol, contenant une boue de curage, est placé dans un sac, conjointement avec des moyens de stockage d'eau et d'absorption d'eau, ainsi que des ingrédients nécessaires à la croissance et la protection de plantes, et un scion ou des semences appropriés y étant plantés, caractérisé en ce que la proportion caractéristique du mélange de sol est constituée par de la boue de curage, en ce que la boue de curage est asséchée avant ensachage, en ce qu'on lui ajoute par mélange les moyens de stockage d'eau et d'absorption d'eau et qu'on lui adjoint des microorganismes, ainsi que des organismes vivants très petits et petits, et en ce que l'on enterre ensuite le sac ainsi préparé dans une fosse de plantation.

2. Procédé selon la revendication 1, caractérisé en ce que la boue de curage est pasteurisée.

3. Procédé selon la revendication 1, caractérisé en ce que la boue de curage est décontaminée par irradiation avec des rayons ionisants.

4. Procédé selon la revendication 1, caractérisé en ce que la boue de curage est exposée à un rayonnement solaire intense avant exploitation.

5. Procédé selon la revendication 1, caractérisé en ce que l'on ajoute par mélange à la boue de curage d'autres déchets organiques tels que du substrat d'ordures ménagères, des déchets de brasserie, du lisier, du fumier, de la boue de curage compostée, des écorces d'arbres, de la sciure, du feuillage et.....

6. Procédé selon la revendication 1, caractérisé en ce que l'on ajoute à la boue de curage, comme produit absorbant l'eau, du gel de silice et de la diatomite et des minéraux argileux et de la zéolithe et des polyalcools (glycol, glycérine, hexite) et des polyacrylamides.

7. Procédé selon la revendication 1, caractérisé en ce que le sac est composé d'une feuille en matière synthétique, ou de matériaux organiques recouverts de matière synthétique (papier, jute).
